# EUROPEAN PATENT APPLICATION

(11) **EP 3 078 261 A1**
(43) Date of publication of application: **12.10.2016**
(21) Application number: 14874321.4
(22) Date of filing: 25.12.2014
(51) Int. Cl.: A01G 9/00, A01G 1/06, A01G 7/00, A01G 9/24, A01G 27/00

(54) **DEVICE FOR GROWING SEEDLINGS, AND DEVICE FOR PRODUCING GRAFTED SEEDLINGS PROVIDED WITH DEVICE FOR GROWING SEEDLINGS**

(30) Priority: 27.12.2013 JP 2013272235
(71) Applicant: Mechatech Limited Company, Hiroshima 739-0151 (JP)
(72) Inventor: HANAMURA, Takeshi, Higashi-Hiroshima-shi Hiroshima 739-0035 (JP)
(74) Representative: Style, Kelda Camilla Karen
(86) International application number: PCT/JP2014/084415
(87) International publication number: WO 2015/099091

(57) **Abstract**

A grafted seedling producing apparatus 1 includes a seeding apparatus 2, a seedling raising apparatus 3 having a carriage 6 and a chamber 7, a grafting apparatus 4, and a plurality of nursery apparatuses 5. The seeding apparatus 2 creates seed-containing cultivation mediums each made up of a cultivated plant seed and a soil contained in a pot, arranges the mediums on a tray, and loads the tray into the carriage 6. The carriage 6 is housed in the chamber 7. The seedling raising apparatus 3 germinates the seeds and grows seedlings generated by the germination while applying light from LEDs. Since a worker does not have to enter the chamber 7, the seedling raising apparatus 3 becomes compact. The grafting apparatus 4 grafts a stock and a scion created by the seedling raising apparatus 3 to form a grafted seedling. The nursery apparatus 5 nurses the grafted seedling.

## Description

### TECHNICAL FIELD

The present invention relates to a seedling growing apparatus including a carriage and a carriage housing chamber, and a grafted seedling producing apparatus using the seedling growing apparatus as a seedling raising apparatus for scions and stocks and also as a grafted seedling nursery apparatus.

### BACKGROUND ART

When cultivated plants such as vegetables, rice plants, and flowers are cultivated, seedlings thereof raised under a proper cultivation environment grow faster with uniform and favorable seedling quality. However, it is difficult to always maintain a proper seedling cultivation environment under the natural environment because the weather irregularly changes. Therefore, various proposals are recently made on seedling raising apparatuses controlling temperature, humidity, an irrigation amount, a light application amount, etc. so as to always maintain a proper cultivation environment for cultivated plants.

Specifically, for example, various proposals are made on a seedling raising apparatus including a seedling raising chamber capable of controlling temperature, humidity, an irrigation amount, a light application amount, etc. inside and a carriage capable of being loaded with pots or trays in which seedlings of cultivated plants are planted (see, e.g., Patent Documents 1 to 3). In such a seedling raising apparatus, after seedling-planted pots or trays are placed on a carriage outside a seedling raising chamber, the carriage is conveyed into the seedling raising chamber, and a cultivation environment inside the seedling raising chamber is always maintained in a proper state to grow the seedlings to a predetermined state before the carriage is conveyed out of the seedling raising chamber.

Additionally, when cultivated plants such as vegetables are cultivated, grafted seedlings made up of coaxially grafted stocks and scions are recently widely used. The grafted seedlings are normally nursed before being planted in a cultivation area such as a field, and an improper nursery environment leads to a low percentage of rootage of the grafted seedlings. Therefore, various proposals are recently made on a nursery apparatus including a nursery chamber capable of controlling temperature, humidity, a light application amount, etc. inside and a carriage capable of being loaded with pots or trays in which grafted seedlings are planted (see, e.g., Patent Documents 4 to 6).

### PRIOR ART DOCUMENTS

### PATENT DOCUMENTS

Patent Document 1: JP H5-7429 A
Patent Document 2: JP H11-98924 A
Patent Document 3: JP 2001-333640 A
Patent Document 4: JP H8-130991 A
Patent Document 5: JP H9-271271 A
Patent Document 6: JP H10-28475 A

### SUMMARY OF THE INVENTION

### PROBLEM TO BE SOLVED BY THE INVENTION

For example, since conventional seedling raising apparatuses or nursery apparatuses including a seedling raising chamber or a nursery chamber and a carriage disclosed in Patent Documents 1 to 6 require a worker to enter the seedling raising chamber or the nursery chamber to perform various operations, the seedling raising chamber or the nursery chamber has a large structure, which necessitates a large site for disposing the seedling raising chamber or the nursery chamber. This leads to a problem of high construction costs of the seedling raising chamber or the nursery chamber (and thus the grafted seedling producing apparatus). The conventional seedling raising chamber or nursery chamber is associated with large power consumption of a light source for applying light to cultivated plants and therefore has a problem of high operation costs of the seedling raising chamber or the nursery chamber (and thus the grafted seedling producing apparatus).

The present invention was conceived for solving the conventional problem, and a problem to be solved is to provide a compact seedling growing apparatus with small power consumption and low construction and operation costs or a grafted seedling producing apparatus utilizing the seedling growing apparatus.

### MEANS FOR SOLVING PROBLEM

A seedling growing apparatus growing or nursing a seedling or a grafted seedling of a cultivated plant according to the present invention conceived for solving the problem includes a carriage and a carriage housing chamber housing the carriage. The carriage has a plurality of retaining members arranged vertically away from each other and each retaining a pot or a tray containing a seedling or a seed of a cultivated plant or a grafted seedling of a cultivated plant along with a cultivation medium thereof. The carriage housing chamber has a plurality of supporting members arranged vertically away from each other and each disposed with a light-emitting diode. Each of the retaining members is disposed at a position between the two adjacent supporting members in a vertical direction. The retaining members and the supporting members are configured such that when the carriage is housed in the carriage housing chamber, the retaining members and the supporting members are alternately positioned one by one in a vertical direction.

The seedling growing apparatus according to the present invention preferably has the carriage housing chamber provided with a light emission controller periodically alternately switching lighting and extinction of the light-emitting diode and controlling a switching period of lighting and extinction of the light-emitting diode, a light emission intensity during lighting of the light-emitting diode, and a percentage of a lighting time of the light-emitting diode in each switching period. The carriage housing chamber is preferably provided with a light-emitting diode moving mechanism changing a light radiation direction or a light radiation distance of the light-emitting diode. The light radiation direction of the light-emitting diode may periodically be changed. If needed, each of the supporting members may be provided with a cooling mechanism cooling the light-emitting diode, for example, a water-cooling pipe or an air-cooling fan.

The seedling growing apparatus of the present invention has the retaining members each provided with an irrigating member irrigating a seedling or a seed of a cultivated plant or a grafted seedling of a cultivated plant contained in the pot or tray retained on the retaining member as well as a draining member draining surplus water from the pot or tray, and preferably has the carriage housing chamber provided with a water supply mechanism supplying water to the irrigating member.

The grafted seedling producing apparatus according to the present invention includes a plurality of seedling raising apparatuses, a grafting apparatus, and a nursery apparatus. A first seedling raising apparatus of the plurality of the seedling raising apparatuses is made up of the seedling growing apparatus according to the present invention and grows a seedling of a first cultivated plant to be used as a scion. A second seedling raising apparatus of the plurality of the seedling raising apparatuses is made up of the seedling growing apparatus according to the present invention and grows a seedling of a second cultivated plant to be used as a stock. The grafting apparatus creates a scion by cutting off a lower part of the seedling of the first cultivated plant grown by the first seedling raising apparatus (scion seedling raising apparatus) while creating a stock by cutting off an upper part of the second cultivated plant grown by the second seedling raising apparatus (stock seedling raising apparatus), and grafts the scion and the stock to create a grafted seedling. The nursery apparatus is made up of the seedling growing apparatus according to the present invention and nurses the grafted seedling created by the grafting apparatus.

The grafted seedling producing apparatus according to the present invention preferably includes a seeding apparatus that creates a seed-containing cultivation medium made up of a seed of the first or second cultivated plant and a cultivation medium of the seed contained in a pot or a tray and that places the seed-containing cultivation medium on the carriage of the seedling raising apparatus. The carriage disposed with the seed-containing cultivation medium including the seed of the first cultivated plant makes up the first seedling raising apparatus (scion seedling raising apparatus) along with the carriage housing chamber housing the carriage. On the other hand, the carriage disposed with the seed-containing cultivation medium including the seed of the second cultivated plant makes up the second seedling raising apparatus (stock seedling raising apparatus) along with the carriage housing chamber housing the carriage.

### ADVANTAGE OF THE INVENTION

In the seedling growing apparatus according to the present invention, when a worker pushes into the carriage housing chamber the carriage loaded with pots or trays containing seedlings or seeds of a cultivated plant or grafted seedlings of a cultivated plant (hereinafter referred to as a "cultivated plant seedling etc."), the carriage is housed in the carriage housing chamber so that the cultivated plant seedling etc. can be grown. Therefore, since the worker does not have to enter the carriage housing chamber, the carriage housing chamber only needs to have a minimum capacity capable of housing the carriage and becomes compact. Since the light-emitting diodes with small power consumption are used as the light source applying light to the cultivated plant seedling etc., the power consumption of the seedling growing apparatus can be reduced. Therefore, the cultivated plant seedling etc. can be grown by a compact apparatus with reduced power consumption. Additionally, according to the grafted seedling producing apparatus according to the present invention, grafted seedlings can be produced by a compact apparatus with reduced power consumption at a high percentage of rootage (survival rate).

### BRIEF DESCRIPTION OF DRAWINGS

Fig. 1 is a schematic plane view of a general configuration of a seedling growing apparatus (a seedling raising apparatus or a nursery apparatus) according to the present invention and a general configuration of a grafted seedling producing apparatus according to the present invention using the seedling growing apparatus as a seedling raising apparatus and a nursery apparatus.
Fig. 2 is a side view of a seeding apparatus making up the grafted seedling producing apparatus.
Fig. 3 is a side view of a seeding machine making up a seeding apparatus.
Fig. 4 is a front view of a carriage making up the seedling growing apparatus or the grafted seedling producing apparatus.
Fig. 5 is a side view of the carriage.
Fig. 6 is a front view of a carriage housing chamber (a seedling raising chamber or a nursery chamber) making up the seedling growing apparatus (the seedling raising apparatus or the nursery apparatus).
Fig. 7 is a side view of the carriage housing chamber.
Fig. 8 is a front view of the carriage housing chamber in a state of housing the carriage.
Fig. 9 is a side view of the carriage housing chamber in the state of housing the carriage.
Fig. 10 is a schematic plane view of a grafting apparatus making up the grafted seedling producing apparatus.
Fig. 11 is a schematic plane view of an index table making up the grafting apparatus.
Fig. 12 is a schematic elevation cross-sectional view of the index table.

### MODES FOR CARRYING OUT THE INVENTION

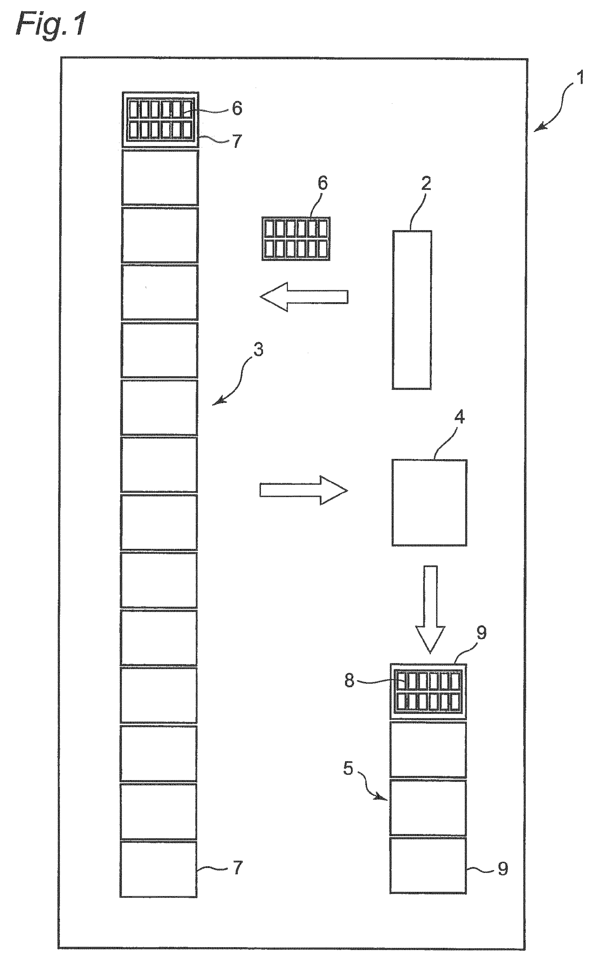

An embodiment of the present invention will now specifically be described with reference to the accompanying drawings. An overall configuration of a grafted seedling producing apparatus according to the present invention will first be described with reference to Fig. 1. A grafted seedling producing apparatus 1 according to the present invention includes a seeding apparatus 2, multiple (14 in a specific example shown in Fig. 1) seedling raising apparatuses 3, a grafting apparatus 4, and multiple (4 in the specific example shown in Fig. 1) nursery apparatuses 5. The number of the seedling raising apparatuses 3 or the nursery apparatuses 5 disposed of Fig. 1 is merely exemplarily illustrated and the present invention is obviously not limited thereto. The number of the nursery apparatuses 5 may not necessarily be more than one and the only one nursery apparatus may be disposed.

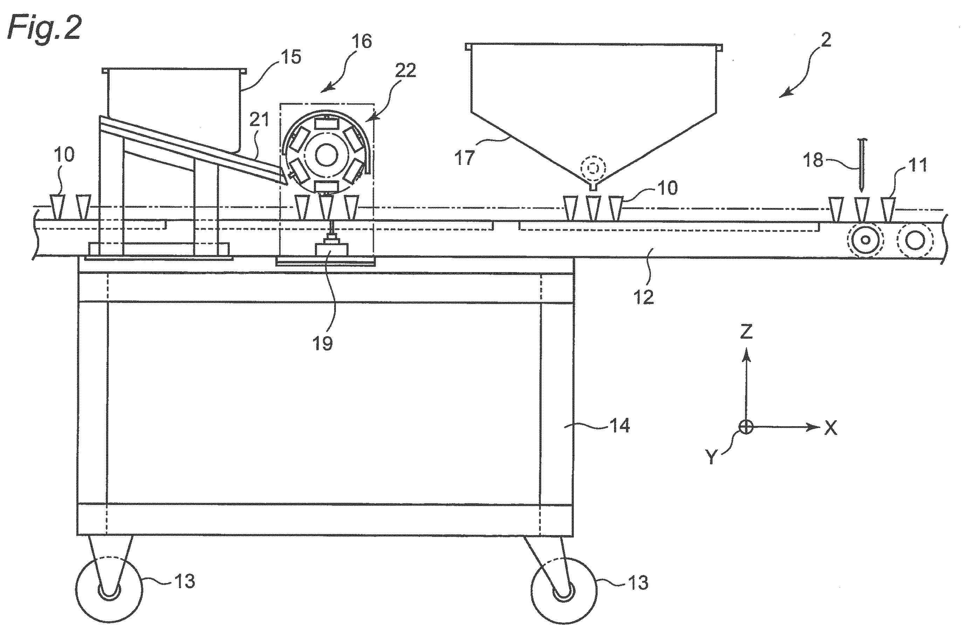

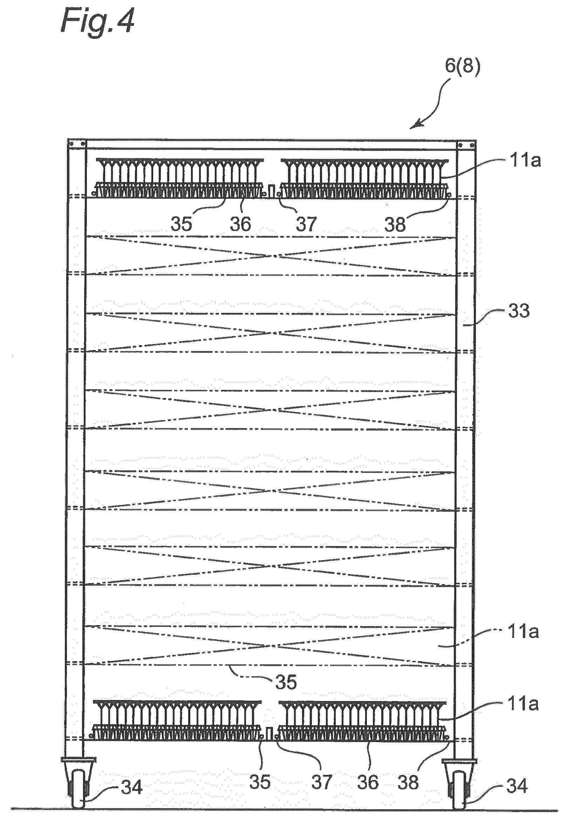

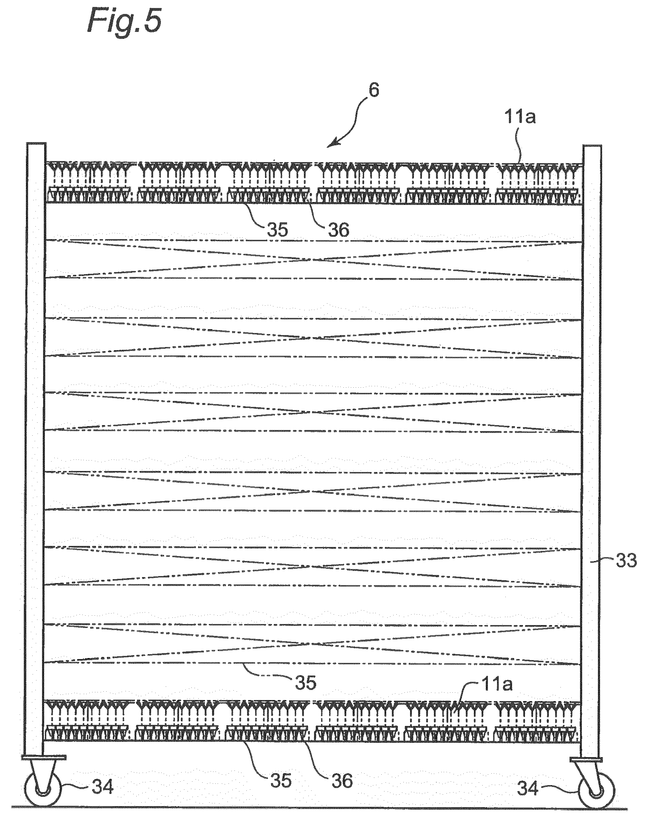

The seeding apparatus 2 creates a seed-containing cultivation medium (i.e., a seeded cultivation medium) made up of a seed of a first cultivated plant (hereinafter referred to as a '"scion plant") or a seed of a second cultivated plant (hereinafter referred to as a "stock plant") and a soil (e.g., a culture soil, a cultivation soil) suitable for germinating the seed and growing a seedling generated by the germination contained in a pot 10 (see Fig. 2), arranges such multiple seed-containing cultivation mediums on a tray 36 (see Figs. 4 and 5), and loads the tray 36 into a seedling raising carriage 6. It is noted that a scion seeding apparatus for creating only the seed-containing cultivation mediums of the scion plant may be disposed in parallel with a stock seeding apparatus for creating only the seed-containing cultivation mediums of the stock plant. Particularly when the grafted seedling producing apparatus 1 is large in scale, the two seeding apparatuses are preferably disposed in parallel in this way. The seedling raising carriage 6 loaded with the multiple trays 36 is moved by a worker and sent to one of the multiple seedling raising apparatuses 3.

The seedling raising apparatuses 3 germinate the seeds of the scion plant or the stock plant and grow seedlings generated by the germination. The multiple seedling raising apparatuses 3 (seedling growing apparatuses) each have the seedling raising carriage 6 and a seedling raising chamber 7 (carriage housing chamber) housing the seedling raising carriage 6. As described in detail later, when the seedling raising chamber 7 houses the seedling raising carriage 6, a worker does not need to perform an operation related to seedling raising in the seedling raising chamber 7 and, therefore, the seedling raising chamber 7 is made as small as possible in dimension to the extent that the seedling raising carriage 6 can be housed. The multiple seedling raising carriages 6 have substantially the same structure and dimensions as each other, and the multiple seedling raising chambers 7 have substantially the same structure and dimensions as each other.

Therefore, the seedling raising apparatuses 3 can grow both the scion plant seedlings and the stock plant seedlings. In particular, some of the multiple seedling raising apparatuses 3 are used for growing the scion plant seedlings and the other seedling raising apparatuses 3 are used for growing the stock plant seedlings. The operations of the surplus seedling raising apparatuses 3 are stopped. As a result, both the scion plant seedlings and the stock plant seedlings are concurrently grown under favorable raising environments with temperature, humidity, irrigation amounts, light application amounts etc. properly controlled by the seedling raising apparatuses 3. When the seedlings of the scion plant or the stock plant have grown to a predetermined state in each of the seedling raising apparatuses 3, the seedling raising carriage 6 housed in the seedling raising chamber 7 is pulled outside and moved to the vicinity of the grafting apparatus 4 by a worker.

The grafting apparatus 4 grafts a scion plant seedling and a stock plant seedling grown by the respective seedling raising apparatuses 3 to create a grafted seedling. In particular, the grafting apparatus 4 creates a scion by cutting a lower part of a scion plant seedling (basically a half part on the root side) while creating a stock by cutting off an upper part of a stock plant seedling (basically a half part on the leaf tip side), and grafts the scion and the stock to create a grafted seedling. Multiple grafted seedlings created by the grafting apparatus 4 are directly arranged on the tray 36, or are arranged on the tray 36 after the pots 10 are attached to root portions. The tray 36 is loaded into a nursery carriage 8. The nursery carriage 8 loaded with the multiple trays 36 is moved by a worker and sent to one of the multiple nursery apparatuses 5.

The nursery apparatus 5 nurses the grafted seedlings created by the grafting apparatus 4. The multiple nursery apparatuses 5 (seedling growing apparatuses) each include the nursery carriage 8 and a nursery chamber 9 (carriage housing chamber) housing the nursery carriage 8. When the nursery chamber 9 houses the nursery carriage 8, a worker does not need to perform an operation related to nursery in the chamber 9 and, therefore, the nursery chamber 9 is made as small as possible in dimension to the extent that the nursery carriage 8 can be housed. The multiple nursery carriages 8 have substantially the same structure and dimensions as each other, and the multiple nursery chambers 9 have substantially the same structure and dimensions as each other. Three arrows shown in Fig. 1 indicate basic movement directions of the seedling raising carriages 6 or the nursery carriages 8.

In the grafted seedling producing apparatus 1, the seedling raising carriage 6 making up the seedling raising apparatus 3 and the nursery carriage 8 making up the nursery apparatus 5 have substantially the same structure and dimensions as each other. The seedling raising chamber 7 making up the seedling raising apparatus 3 and the nursery chamber 9 making up the nursery apparatus 5 have substantially the same structure and dimensions as each other. In short, the seedling raising apparatus 3 and the nursery apparatus 5 have substantially the same structure as each other and are only different in operation conditions thereof, i.e., temperature, humidity, irrigation, a form of light application, etc., depending on whether a form of use thereof is the growth of seeds or seedlings or the nursery of grafted seedlings.

As a result, the seedling raising apparatus 3 and the nursery apparatus 5 making up the grafted seedling producing apparatus 1 shown in Fig. 1 both correspond to a "seedling growing apparatus" described in MEANS FOR SOLVING PROBLEM (or CLAIMS) of this description. Similarly, the seedling raising carriage 6 and the nursery carriage 8 both correspond to a "carriage" described in MEANS FOR SOLVING PROBLEM of this description, and the seedling raising chamber 7 and the nursery chamber 9 both correspond to a "carriage housing chamber" described in MEANS FOR SOLVING PROBLEM of this description. In other words, the grafted seedling producing apparatus 1 uses the "seedling growing apparatuses" described in MEANS FOR SOLVING PROBLEM of this description for the seedling raising apparatus 3 and the nursery apparatus 5.

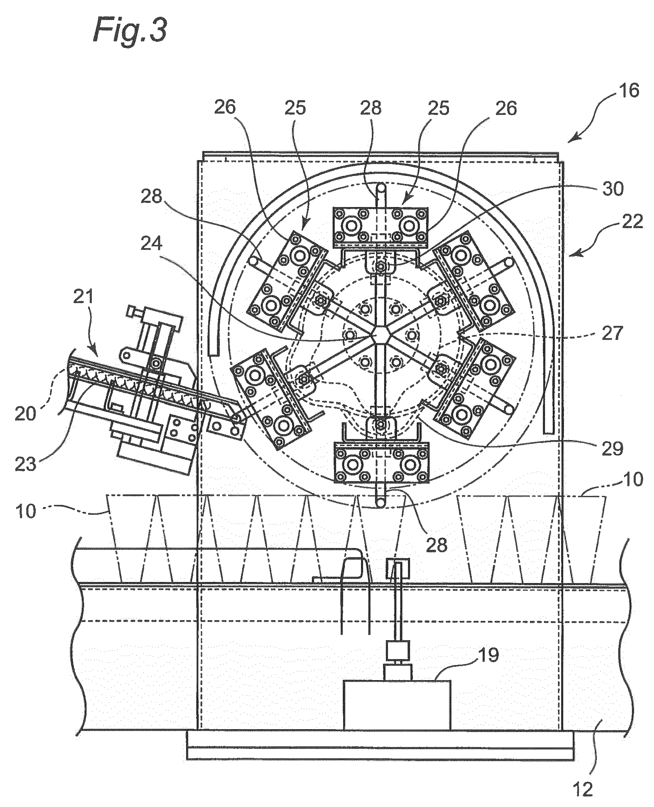

The seeding apparatus 2 making up the grafted seedling producing apparatus 1 will hereinafter be described in terms of structure and operation with reference to Figs. 2 and 3. The seeding apparatus 2 creates a multiplicity of the seed-containing cultivation mediums 11 each made up of a seed of a cultivated plant and a soil (or a solid cultivation medium other than the soil) suitable for growing the cultivated plant contained in the pot 10. In this grafted seedling producing apparatus 1, the one seeding apparatus 2 alternately creates a desired numerical quantity of seed-containing cultivation mediums of the scion plant and a desired numerical quantity of seed-containing cultivation medium of the stock plant. The manipulation or operation of the seeding apparatus 2 has no particular difference between the case of creating the seed-containing cultivation mediums of the scion plant and the case of creating the seed-containing cultivation mediums of the stock plant.

As shown in Fig. 2, the seeding apparatus 2 is provided with a conveying apparatus 12 linearly conveying a multiplicity of the pots 10 (seeding/seedling raising containers) made of, for example, plastic, in a direction indicated by an arrow X (hereinafter referred to as an "X-direction") in a horizontal plane. The conveying apparatus 12 is supported by multiple support bases 14 (only one is shown in Fig. 1) including support base casters 13 on a lower end part. Additionally, the seeding apparatus 2 is provided with a seed storage tank 15 storing scion-plant or stock-plant seeds 20 (hereinafter referred to simply as the "seeds 20"), a seed supply machine 16 distributing the seeds 20 stored in the seed storage tank 15 one by one into each of the pots 10, a soil supply machine 17 supplying an appropriate amount of the soil to each of the pots 10 containing the seed 20, and a water supply machine 18 supplying an appropriate amount of water to each of the pots 10 containing the seed 20 and the soil, in order from upstream in a conveyance direction, i.e., a flow direction (movement direction), of the pots 10.

Although not shown in detail, the conveying apparatus 12 has continuously or intermittently conveys the pots 10 in the X-direction in a state in which the multiple (e.g., 10) pots 10 are linearly arranged in the horizontal plane in a direction (hereinafter referred to as a "Y-direction") indicated by a direction indication mark Y perpendicular to the X-direction, i.e., in the width direction of the conveying apparatus 12. In particular, the conveying apparatus 12 conveys multiple lines (e.g., 10 lines) of the pots 10 in the X-direction in the same movement form. Additionally, the conveying apparatus 12 is provided with a position sensor 19 detecting whether the pots 10 are arranged at proper positions relative to the seed supply machine 16. In Fig. 2, an arrow Z indicates a vertical direction.

The seed supply machine 16, the soil supply machine 17, and the water supply machine 18 individually and simultaneously supply the seeds 20, the soil, and the water, respectively, to the multiple pots 10 lined in the Y-direction (i.e., the width direction of the conveying apparatus 12). The multiple (e.g., 200) seed-containing cultivation mediums 11 each made up of the seed 20, the soil, and the water contained in the pot 10 are placed on the tray 36 (see Figs. 4 and 5) in a predetermined arrangement (e.g., in a checkerboard pattern of 20 columns and 10 rows). The multiple (e.g., eight) trays 36 with a plurality of the seed-containing cultivation mediums 11 placed thereon are loaded into the seedling raising carriage 6. Subsequently, the seedling raising carriage 6 is moved by a worker and housed in the seedling raising chamber 7.

As shown in Fig. 3, the seed supply machine 16 is provided with a seed taking-out mechanism 21 disposed above the conveying apparatus 12 to line up and take out the seeds 20 from the seed storage tank 15 (see Fig. 2) without vertical overlap, and a seed distribution mechanism 22 disposed above the conveying apparatus 12 to hold and distribute the seeds 20 taken out by the seed taking-out mechanism 21 one by one to each of the pots 10 on the conveying apparatus 12.

Although not shown in detail, the seed taking-out mechanism 21 includes multiple (e.g., 10) mutually parallel seed movement passages 23 (e.g., grooves with V-shaped valley-like cross sections) each extending in the X-direction (i.e., the direction of extension of the conveying apparatus 12) while inclining downward and arranged away from each other in the Y-direction (i.e., the width direction of the conveying apparatus 12) at predetermined arrangement intervals (pitches). The number and the arrangement intervals of the multiple seed movement passages 23 are respectively the same as the number and the arrangement intervals of the pots 10 arranged on the conveying apparatus 12 in the width direction thereof. As a result, the seed taking-out mechanism 21 supplies the seeds 20 to the seed distribution mechanism 22 in multiple lines (e.g., 10 lines). Therefore, the seed taking-out mechanism 21 is arranged in a form allowing the seed distribution mechanism 22 to hold the seeds 20.

The seed distribution mechanism 22 includes six rotary members 25 that are attached around a shaft 24 extending in the Y-direction and rotating counterclockwise in a positional relationship of Fig. 3 and that rotate integrally with the shaft 24. The six rotary members 25 are disposed around a central axis of the shaft 24 at angular positions separated from each other by a central angle of 60 °. Although not shown in detail, each of the rotary member 25 includes multiple (e.g., 10) tweezer-like holding members 26 arranged in parallel with and away from each other in the Y-direction at predetermined arrangement intervals (pitches). The number and the intervals of the multiple holding members 26 disposed on the rotary member 25 are respectively the same as the number and the intervals of the seed movement passages 23 of the seed taking-out mechanism 21.

Each of the holding members 26 holds the one seed 20 located at the head of the seeds 20 arranged in each of the seed movement passages 23 at a position corresponding to a tip part of each of the seed movement passages 23 of the seed taking-out mechanism 21. This holding member 26 releases the holding of the seed 20 when arriving at a position corresponding to the pot 10 to be supplied with the seed 20 as the rotary member 25 rotates. As a result, this seed 20 freely falls into the pot 10.

The seed distribution mechanism 22 includes a holding-member advancing/retreating cam 27 for moving the rotary members 25 and thus the holding members 26 disposed on the rotary member 25 in a direction departing from or approaching to the shaft 24 (hereinafter referred to as a "radial direction"), and a seed-holder opening/closing cam 29 for opening and closing a seed holder 28 disposed at a tip part (a radially outer end part) of each of the holding members 26.

The holding member advancing/retreating cam 27 is a substantially disk-shaped cam at a fixed position. The holding member advancing/retreating cam 27 has bulging parts at an angular position corresponding to tip parts of the seed movement passages 23 (hereinafter referred to as a "seed holding angular position") and an angular position corresponding to the pots 10 to be supplied with the seeds 20 on the conveying apparatus 12 (hereinafter referred to as a "seed falling angular position "), in a circumferential direction. The bulging parts partially bulge out toward the radial outside gently (i.e., without forming a corner) such that the parts most largely bulge at the seed holding angular position or the seed falling angular position. On the other hand, each of the rotary members 25 is provided with a cam contact part 30 having a radial inner end part always in contact with a circumferential surface of the holding member advancing/retreating cam 27.

As a result, when coming to the seed holding angular position or the seed falling angular position, the rotary members 25 and thus the holding members 26 are projected radially outward by the bulging parts of the holding member advancing/retreating cam 27 in accordance with a degree of bulging thereof, so that the seed holders 28 can hold the seeds 20 or cause the seeds 20 to freely fall. On the other hand, the rotary members 25 are retreated radially inward at positions that are neither the seed holding angular position nor the seed falling angular position.

The seed-holder opening/closing cam 29 is a substantially disk-shaped cam at a fixed position. As is the case with the holding member advancing/retreating cam 27, the seed-holder opening/closing cam 29 partially bulges out toward the radial outside gently at the seed holding angular position and the seed falling angular position. On the other hand, each of the rotary members 25 is provided with a seed holder opening/closing mechanism (not shown) opening tip parts of the seed holders 28 when being engaged with a bulging part of the seed-holder opening/closing cam 29, and closing or narrowing (contracting) the tip parts of the seed holders 28 when not engaged with the bulging part.

As a result, when coming to the seed holding angular position or the seed falling angular position, the seed holders 28 of the holding members 26 are opened in a projected state due to the bulging parts of the seed-holder opening/closing cam 29 and the seed holder opening/closing mechanism, so that the seeds 20 can be taken into the seed holders 28 or the seeds 20 can be dropped downward from the seed holders 28. The seed holders 28 taking in the seeds 20 may be assisted by reducing the pressure inside the seed holders, and the seed holders 28 separating the seeds 20 may be assisted by increasing the pressure inside the seed holders.

The seedling raising carriage 6 making up the seedling raising apparatus 3 of the grafted seedling producing apparatus 1 will hereinafter be described in terms of structure and operation with reference to Figs. 4 and 5. The seedling raising carriage 6 has a carriage body part 33 forming a framework thereof, carriage casters 34 attached to lower end parts of four support posts making up the carriage body part 33, and multiple (e.g., 8) tray retaining members 35 disposed in the carriage body part 33. The multiple tray retaining members 35 are arranged vertically away from each other and the tray retaining members 35 each retain the multiple (e.g., 12) trays 36. Vertical arrangement intervals (pitches) of the tray retaining members 35 are preferably set such that when the seedlings of the scion plant of the stock plant are grown in the seedling raising chamber 7, a proper space is formed between a seedling upper end part and the tray retaining member 35 or the tray 36 thereabove or a constituent element (such as a supporting member and a light-emitting diode described later) of the seedling raising chamber 7. Figs. 4 and 5 show a state in which the seedlings of the scion plant or the stock plant have grown to a level suitable for grafting.

Although not shown in detail, each of the tray retaining members 35 is provided with an irrigating member 37 irrigating the seed-containing cultivation mediums 11 placed on the tray 36 retained thereon or seedlings germinated from the seeds 20 in the seed-containing cultivation mediums 11 (hereinafter referred to as "growing seedlings 11a"), and a draining member 38 draining surplus water from the tray 36. The irrigating member 37 is supplied with water from a water supply mechanism (not shown) disposed on the seedling raising chamber 7. When a door (not shown) of the seedling raising chamber 7 is closed, the irrigating member 37 is automatically connected to the water supply mechanism.

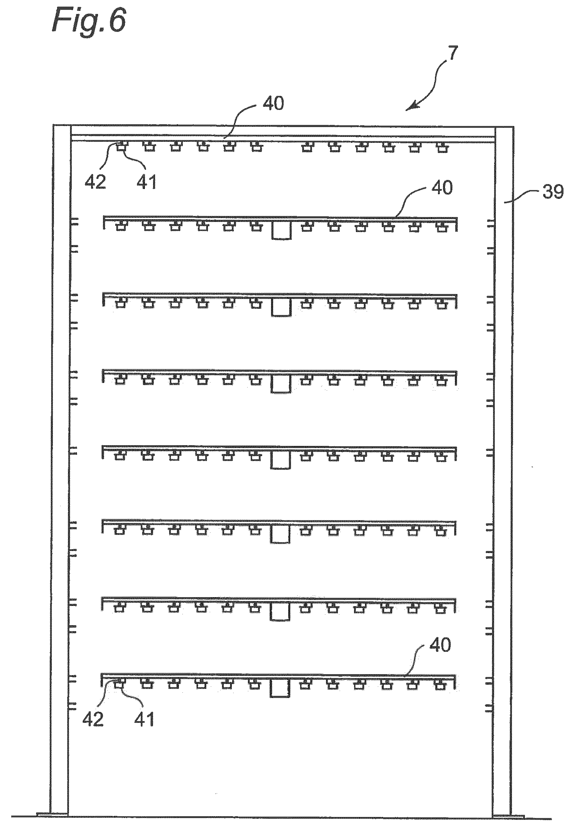

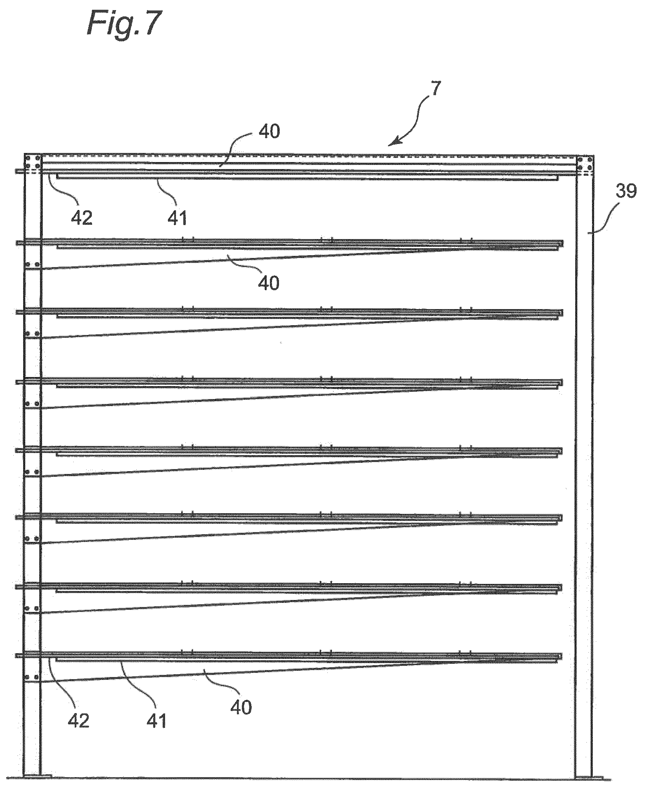

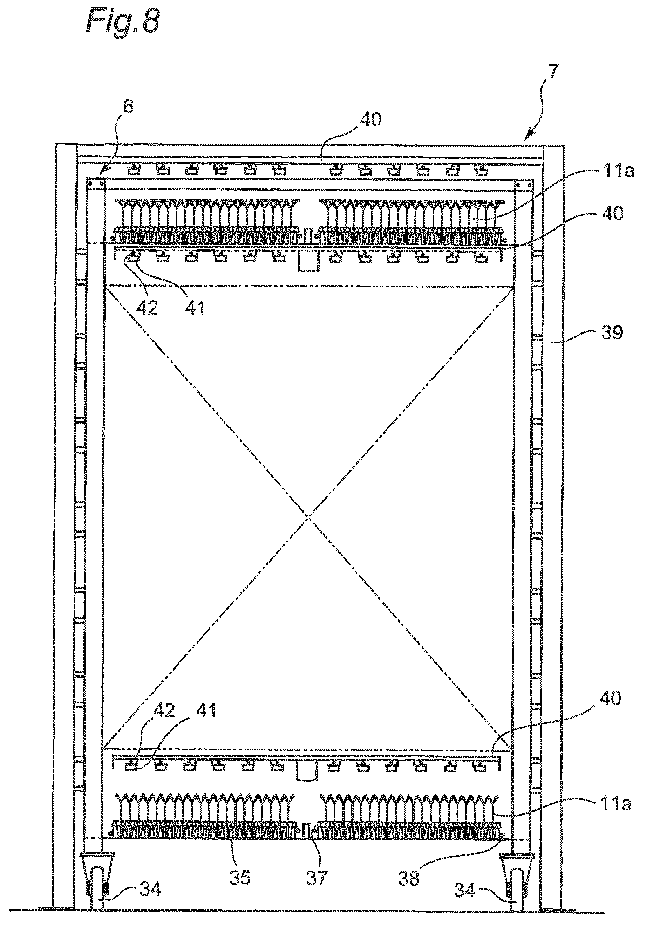

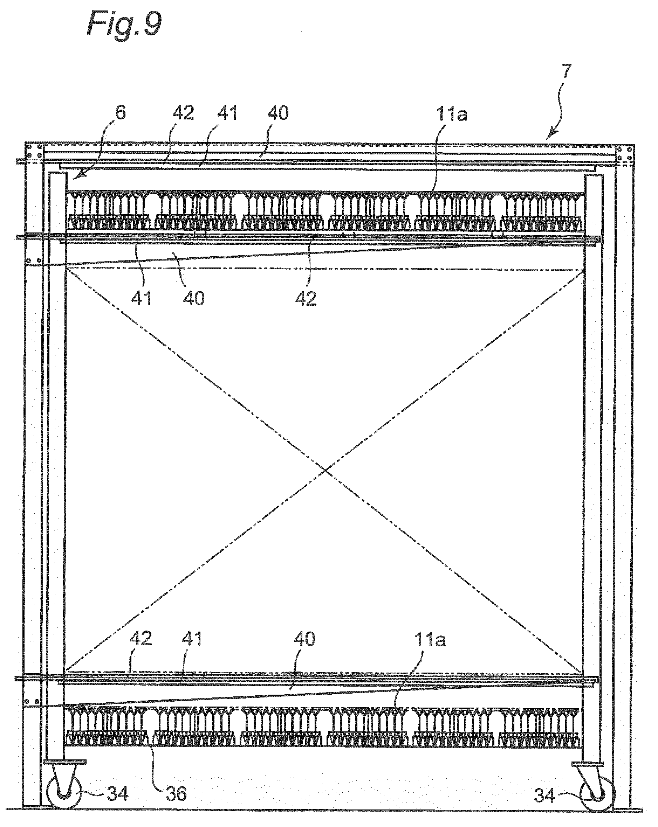

The seedling raising chamber 7 making up the grafted seedling producing apparatus 1 will hereinafter be described in terms of structure and operation with reference to Figs. 6 to 9. Each of the seedling raising chambers 7 has multiple (e.g. , eight) supporting members 40 (light-emitting diode supporting members) arranged vertically away from each other in a housing 39 thereof. Vertical arrangement intervals (pitches) of the supporting members 40 are the same as the vertical arrangement intervals (pitches) of the retaining members 35 in the seedling raising carriage 6. The supporting members 40 are arranged such that when the seedling raising carriage 6 is housed in the seedling raising chamber 7 (in a state shown in Figs. 8 and 9), the tray retaining members 35 of the seedling raising carriage 6 and the supporting members 40 of the seedling raising chamber 7 are located alternately one by one in a vertical direction. Therefore, when the seedling raising carriage 6 is housed in the seedling raising chamber 7, each of the tray retaining members 35 is located between the two adjacent supporting members 40 in a vertical direction.

Although not shown in detail, the seedling raising chamber 7 is provided with a cultivation environment adjustment mechanism automatically controlling temperature, humidity, an irrigation amount, etc. therein to a state suitable for seedling raising. Such a cultivation environment adjustment mechanism is conventionally well known among those skilled in the art and will not be described in detail.

The seedling raising chamber 7 is provided with a carbon dioxide supply machine supplying carbon dioxide (CO₂) and an oxygen supply machine supplying oxygen (O₂) for promoting the growth of the growing seedlings 11a. Carbon dioxide promotes photosynthesis in the leaves or stems of the growing seedlings 11a, and oxygen mainly promotes respiration of the roots and thus the growth of the growing seedlings 11a. The supply amounts of carbon dioxide and oxygen are preferable set depending on a kind of the growing seedlings 11a, a degree of promotion of the growth of the growing seedlings 11a. Because of the specific gravity larger than that of air, carbon dioxide supplied somewhat above the upper end parts of the growing seedlings 11a evenly spreads to the leaves or stems of the growing seedlings 11a. Oxygen may be supplied in the vicinity of the roots of the growing seedlings 11a. If it is not particularly necessary to promote the growth of the growing seedlings 11a, the carbon dioxide supply machine and the oxygen supply machine may not be disposed.

If the carbon dioxide supply machine and the oxygen supply machine are disposed, transparent walls surrounding the lateral sides of the growing seedlings 11a are preferably disposed on the periphery of the tray 36 or inside the tray 36 (e.g. , arranged at appropriate intervals in a checkerboard pattern longitudinally and laterally in a plane view) so as to retain carbon dioxide and oxygen around the growing seedlings 11a and suppress the dispersion thereof. The transparent walls do not obstruct the application of light to the growing seedlings 11a.

The supporting members 40 are each disposed with a plurality (multiplicity) of light-emitting diodes 41 having small power consumption in a form of applying light toward a lower region, i.e., toward the lower side or the obliquely lower side. The supporting members 40 are each provided with a plurality of cooling pipes 42 that are in contact with upper surfaces of the light-emitting diode 41 and that allow cooling water to flow therethrough. These cooling pipes 42 cool and maintain the light-emitting diodes 41 at substantially normal temperature. If the heat generation of the light-emitting diodes 41 cause no particular problem, the cooling pipes may not be disposed. The wavelength of light emitted by the cooled light-emitting diodes 41 are preferably set depending on a cultivated plant. For example, if seedlings of vegetables are grown, the light with a wavelength of 400 to 660 nm is used. The intensity of light emitted by the light-emitting diodes 41 can be changed in a wide range by varying a voltage applied thereto.

The seedling raising chamber 7 is provided with a light emission controller (not shown) controlling a light emission mode of the light-emitting diodes 41, i.e., a mode of the light emitted to the growing seedlings 11a, and a light-emitting diode moving mechanism (not shown) periodically changing (swinging) a posture or an orientation of the light-emitting diodes 41, i.e., a direction of emission of the light, and changing the positions of the light-emitting diodes 41.

The light emission controller periodically alternately switches lighting and extinction of the light-emitting diodes 41, and controls a switching period of lighting and extinction of the light-emitting diodes 41, a light emission intensity during lighting of the light-emitting diode 41, and a percentage of a lighting time of the light-emitting diodes 41 in each switching period, i.e., a rate between the lighting time and the extinction time (e.g., repeats 0.2 seconds of lighting and 0.2 seconds of extinction). Since the light-emitting diodes 41 are intermittently lighted rather than being lighted all the time, the seedling raising chamber 7 and thus the grafted seedling producing apparatus 1 can be reduced in power consumption. According to the knowledge of the inventors of this application, it is considered that no particular trouble occurs in the growth of the growing seedlings 11a even when a percentage the lighting time in each period (cycle) is set to about 40 to 50 %.

The light emission controller controls the lighting/extinction or the light amount of the light-emitting diodes 41 so as to artificially produce states of day and night. A mode of lighting/extinction or a light amount of the light-emitting diodes 41 in the state of day or night may be controlled or switched based on a kind of the growing seedlings 11a or a physiological property thereof.

The light-emitting diode moving mechanism periodically changes the direction of light emission of the light-emitting diodes 41 within a predetermined angular range (e.g., 30° to 45° forward and backward or leftward and rightward relative to a vertical line). As a result, even when the arrangement intervals of the light-emitting diodes 41 are made larger, the light can uniformly (evenly) applied to the growing seedlings 11a and the growth rates of the growing seedlings 11a can be made uniform.

The light-emitting diode moving mechanism can freely change the positions of the light-emitting diodes 41 in vertical directions or forward/backward/leftward/rightward directions. Therefore, a mode of light emission to the growing seedlings 11a can preferably be adjusted depending on a kind or a physiological property of the growing seedlings 11a etc.

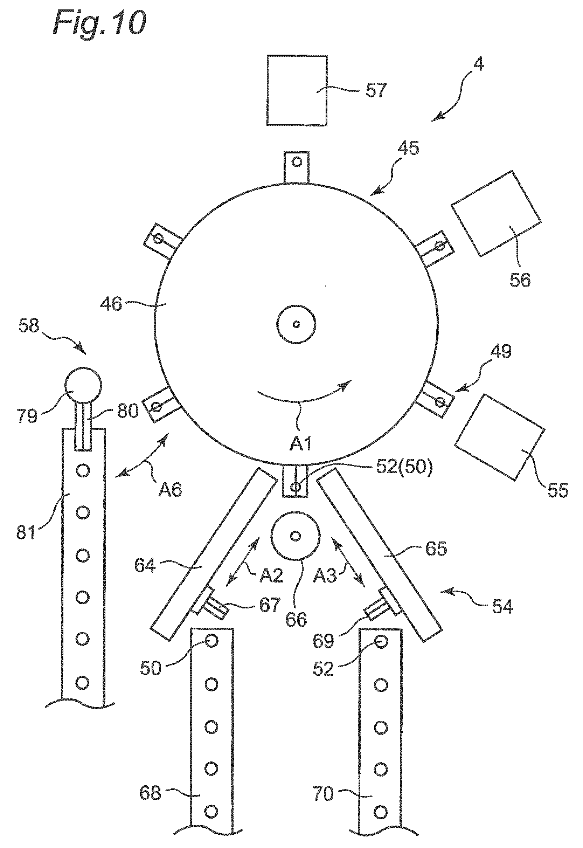

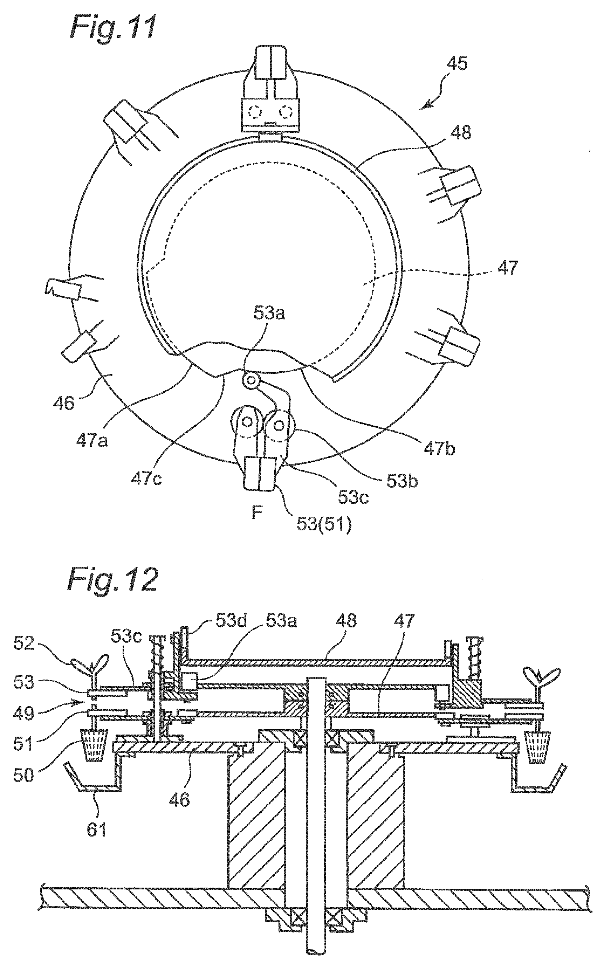

The grafting apparatus 4 making up the grafted seedling producing apparatus 1 will hereinafter be described in terms of structure and operation with reference to Figs. 10 to 12. The growing seedlings 11a of the stock plant (hereinafter referred to as "stock seedlings") and the growing seedlings 11a of the scion plant (hereinafter referred to as "scion seedlings ") grown in the seedling raising chamber 7 are transferred by the seedling raising carriages 6 to the grafting apparatus 4. The grafting apparatus 4 is provided with an index table 45.

The index table 45 has a rotary table 46 having a substantially circular shape in a plane view, a chuck opening/closing cam 47, and a chuck lifting cam 48. The rotary table 46 is disposed with six chuck sets 49 circumferentially separated from each other by a central angle of 60 °. Each of the chuck sets 49 has a stock chuck 51 capable of opening and closing to put a stock 50 into an unclamped state or a clamped state and a scion chuck 53 capable of opening and closing to put a scion 52 into an unclamped state or a clamped state. While the vertical position of the stock chuck 51 is constant, the scion chuck 53 can vertically be displaced.

The rotary table 46 intermittently rotates by 60 ° at constant time intervals in a direction indicated by an arrow A1. The chuck opening/closing cam 47 has a large-diameter cam surface 47a and a small-diameter cam surface 47b engaged with the chuck sets 49 to put the stock chuck 51 as well as the scion chuck 53 into an opened state and a closed state, respectively. The chuck lifting cam 48 has an upper cam surface (not shown) and a lower cam surface (not shown) engaged with the scion chuck 53 to position the scion chuck 53 at an upper position and a lower position, respectively.

A workpiece setting station 54, a first workpiece cutting station 55, a second workpiece cutting station 56, and a tube attaching station 57 are disposed around the index table 45 in order in a rotary table rotation direction and are separated from each other by a central angle of 60 °. Additionally, a workpiece taking-out station 58 is disposed at a position separated from the tube attaching station 57 by a central angle of 120 °. These stations 54 to 58 are all located at positions corresponding to or engaged with any of the chuck sets 49 when the rotary table is stopped.

In the workpiece setting station 54, the stock 50 and the scion 52 are automatically set in the stock chuck 51 and the scion chuck 53, respectively. When set in this way, an upper end part of the stock 50 is appropriately spaced from a lower end part of the scion 52.

The first workpiece cutting station 55 and the second workpiece cutting station 56 cut a stem part of the scion 52 and a stem part of the stock 50, respectively, into shapes enabling the both parts to be brought into coaxial contact. This grafting apparatus 4 cuts the scion 52 near the lower end part into a V-shape (wedge shape), cuts the stock 50 near the upper end part into a V-shape (V-valley shape), and then brings the V-shaped surfaces of the scion 52 and the stock 50 into contact with each other. Specifically, the first workpiece cutting station 55 is provided with a scion V-cutting apparatus (not shown) cutting the scion 52 near the lower end part into a V-shape (wedge shape). On the other hand, the second workpiece cutting station 56 is provided with a stock V-cutting apparatus (not shown) cutting the stock 50 near the upper end part into a V-shape (V-valley shape).

The scion 52 and the stock 50 may be cut near the lower end part and near the upper end part, respectively, at the same angle of inclination, and the inclined surfaces of the scion 52 and the stock 50 may be brought into contact with each other. In this case, the first workpiece cutting station 55 may be provided with an obliquely cutting apparatus obliquely cutting the scion 52 near the lower end part and the stock 50 near the upper end part at the same time. In this case, the second workpiece cutting station 56 is not provided with a cutting apparatus.

In the tube attaching station 57, a tube piece (not shown) is externally fitted/attached to a stem part of a grafted seedling made up of the stock 50 and the scion 52 arranged with the stem parts brought into coaxial contact with each other, so at to fix the stock 50 and the scion 52. While no external force acts on the tube piece or the tube piece is externally fitted to the stem part of the grafted seedling, the tube piece has a cross section of a spiral shape or a shape substantially like a lowercase letter "e", and both circumferential end parts are free ends. Since the stem part of the grafted seedling is entirely covered by the tube piece in this way, the stock 50 and the scion 52 are firmly coupled to each other by the tube piece.

The workpiece taking-out station 58 takes out the grafted seedling. The statins 54 to 58 perform the processes for the stock 50, the scion 52, or the grafted seedling substantially at the same time when the rotary table is stopped.

The structure and functions of the index table 45 will hereinafter specifically be described. On the substantially disk-shaped rotary table 46 making up the index table 45, the six chuck sets 49 having the stock chucks 51 and the scion chucks 53 are located at positions separated from each other by a central angle of 60 ° in a rotary table circumferential direction. Although the stock chucks 51 are located on the lower side and the scion chucks 53 are located on the upper side, the both chucks are located at substantially overlapping positions in a plane view. A saucer 61 for receiving a soil dropping out from the stock 50 is disposed under each of the stock chucks 51.

The rotary table 46 is controlled by a control apparatus not shown to intermittently rotate by 60 ° at constant short time intervals in a direction of an arrow A1 of Fig. 10. The number of the chuck sets 49 is not limited to six and may be seven or more.

A rotation phase of the rotary table 46 is controlled such that any of the chuck sets 49 is positioned at a front F when the rotary table is stopped. Therefore, when the rotary table is stopped, any of the chuck sets 49 is positioned at each of positions separated from each other by a central angle of 60 ° from the front F in the rotary table circumferential direction. Hereinafter, the front F will be referred to as a first stop position, and the positions separated from each other by a central angle of 60 ° from front F (first stop position) counterclockwise in the rotary table circumferential direction are referred to as a second stop position, a third stop position, ..., and a sixth stop position in order.

The grafting apparatus 4 has the workpiece setting station 54, the first workpiece cutting station 55, the second workpiece cutting station 56, the tube attaching station 57, and the workpiece taking-out station 58 respectively located at first to fourth and sixth stop positions.

The scion chuck 53 includes a cam follower 53a contacting with a cam surface of the chuck opening/closing cam 47, one gear set 53b, and one arm set 53c. The chuck opening/closing cam 47 is provided with the large-diameter cam surface 47a and the small-diameter cam surface 47b, and a transient cam surface 47c is formed at a connection part between the large-diameter cam surface 47a and the small-diameter cam surface 47b for smoothly connecting the both cam surfaces 47a, 47b. The chuck opening/closing cam 47 opens the arm set 53c (unclamped state) when the large-diameter cam surface 47a is in contact with the cam follower 53a, and closes the arm set 53c (clamped state) when the small-diameter cam surface 57b is in contact with the cam follower 53a. An opening/closing mechanism of the stock chuck 51 is the same as the scion chuck 53 and will not be described.

The scion chuck 53 also includes a cam follower 53d contacting with a cam surface of the chuck lifting cam 48. Although not shown in detail, the chuck lifting cam 48 is provided with the upper cam surface and the lower cam surface at a higher height and a lower height, respectively, from a bottom surface, and a transient cam surface is formed at a connection part between the upper cam surface and the lower cam surface for smoothly connecting the both cam surfaces. The chuck lifting cam 48 positions the scion chuck 53 at an upper position (the stock 50 and the scion 52 are spaced apart) when the upper cam surface is in contact with the cam follower 53d, and positions the scion chuck 53 at a lower position (the stock 50 and the scion 52 contact with each other) when the lower cam surface is in contact with the cam follower 53d.

The workpiece setting station 54 is provided with a stock set part 64 for setting the stock 50 to the stock chuck 51, a scion set part 65 for setting the scion 52 to the scion chuck 53, and a cutting blade 66 (circular single blade) cutting off unwanted parts of the stock seedling and the scion seedling, i.e., an upper part of the stock seedling and a lower part of the scion seedling.

The stock set part 64 includes a stock input chuck 67 capable of reciprocating in directions of an arrow A2. When the stock 50 is set to the stock chuck 51, first, a stock seedling is manually chucked by the stock input chuck 67 at a near position (on the side opposite to the stock chuck 51). The stock seedling is conveyed by a stock supply conveyer 68 into the stock set part 64.

Subsequently, the stock input chuck 67 moves toward the stock chuck 51. The upper part (unwanted part) of the stock seedling is cut off by the cutting blade 67 on the way. The stock input chuck 67 sets the stock 50 (in the unclamped state) to the stock chuck 51 in the opened state. The rotation of the chuck opening/closing cam 47 then puts the stock chuck 51 into the closed state, and the stock 50 is clamped by the stock chuck 51. Subsequently, the stock input chuck 67 unchucks the stock 50 and returns to an original position. As a result, the stock 50 is clamped (set) to the stock chuck 51.

The scion set part 65 includes a scion input chuck 69 capable of reciprocating in directions of an arrow A3. When the scion 52 is set to the scion chuck 53, first, a scion seedling is manually chucked by the scion input chuck 69 at a near position (on the side opposite to the scion chuck 53). The scion seedling is conveyed by a scion supply conveyer 70 into the scion set part 65.

Subsequently, the scion input chuck 69 moves toward the scion chuck 53. The lower part (unwanted part) of the scion seedling is cut off by the cutting blade 66 on the way. The scion input chuck 69 sets the scion 52 (in the unclamped state) to the scion chuck 53 in the opened state. The rotation of the chuck opening/closing cam 47 then puts the scion chuck 53 into the closed state, and the scion 52 is clamped by the scion chuck 53. Subsequently, the scion input chuck 69 unchucks the scion 52 and returns to an original position. As a result, the scion 52 is clamped (set) to the scion chuck 53.

The workpiece taking-out station 58 is provided with a workpiece taking-out apparatus 79 taking out a grafted seedling formed by joining the stock 50 and the scion 52 from the chuck set 49. The workpiece taking-out apparatus 79 uses a taking-out chuck 80 to chuck the grafted seedling clamped by the stock chuck 51 and the scion chuck 53.

Subsequently, the rotation of the chuck opening/closing cam 47 puts the stock chuck 51 and the scion chuck 53 into the opened state, and the grafted seedling is released from the clamped state of the chuck set 49 and is chucked only by the taking-out chuck 80. Subsequently, the taking-out chuck 80 rotates in a direction of an arrow A6 to move grafted seedling onto a taking-out conveyer 81 and releases the chucking. As a result, the grafted seedling is conveyed out of the grafting apparatus 4.

The grafted seedlings conveyed out of the grafting apparatus 4 are placed on the tray 36 in a predetermined arrangement (e.g., in a checkerboard pattern of 20 columns and 10 rows). The multiple (e.g., eight) trays 36 each having a plurality of grafted seedlings placed thereon are loaded into the nursery carriage 8. The configuration and operation of the nursery carriage 8 are basically the same as the seedling raising carriage 6 and therefore will not be described in detail. Subsequently, the nursery carriage 8 is moved by a worker and housed in the nursery chamber 9.

The configuration and operation of the nursery chamber 9 are basically the same as the seedling raising chamber 7 and therefore will not be described in detail. The grafted seedlings nursed in the nursery chamber 9 are taken out from the nursery chamber 9 when the grafted seedlings become transplantable to a cultivation soil of a field etc. The grafted seedlings taken out of the nursery chamber 9 are shipped or transplanted to a cultivation soil.

Although the embodiment of the present invention is related to the grafted seedling producing apparatus 1 as described above, the present invention is applicable not only to the grafted seedling producing apparatus 1 but also simply to an apparatus growing seedlings of a cultivated plant. In particular, the seedling raising apparatus 3 having the seedling raising carriage 6 and the seedling raising chamber 7 or the nursery apparatus 5 having the nursery carriage 8 and the nursery chamber 9 can be used for growing seedlings of common cultivated plants without grafting, for example, rice plants, medical plants, leafy vegetables (such as lettuce and cabbage), fruit vegetables (such as strawberry), root vegetables (such as radish and carrot), flowers, fungi (such as mushroom).

For a cultivated plant (e.g., strawberry) not so high when the growing seedlings have completely grown, the seedling growing apparatus according to the present invention can be used for growing the cultivated plant until the growing seedlings are completely grown and harvested.

Therefore, in the case of independently using the seedling raising apparatus 3 (or the nursery apparatus 5) according to the present invention, when a worker pushes the seedling raising carriage 6 (or the nursery carriage 8) loaded with the trays 36 containing seedlings of a cultivated plant into the seedling raising chamber 7 (or the nursery chamber 9), the seedling raising carriage 6 is housed in the seedling raising chamber 7 so that the seedlings of the cultivated plant can be grown. In this case, since the worker does not have to enter the seedling raising chamber 7, the seedling raising chamber 7 only needs to have a minimum capacity capable of housing the seedling raising carriage 6 and becomes compact. Since the light-emitting diodes 41 with small power consumption are used as the light source applying light to the cultivated plant seedlings, the power consumption of the seedling raising chamber 7 can be reduced. Therefore, the cultivated plant seedlings can be grown by a compact apparatus with reduced power consumption. Additionally, according to the grafted seedling producing apparatus 1 according to the present invention, grafted seedlings can be produced by a compact apparatus with reduced power consumption at a high percentage of rootage.

### EXPLANATIONS OF LETTERS OR NUMERALS

1 grafted seedling producing apparatus, 2 seeding apparatus, 3 seedling raising apparatus, 4 grafting apparatus, 5 nursery apparatus, 6 seedling raising carriage, 7 seedling raising chamber, 8 nursery carriage, 9 nursery chamber, 10 pot (pot), 11 seed-containing cultivation medium, 11a cultivated seedling, 12 conveying apparatus, 13 support base caster, 14 support base, 15 seed storage tank, 16 seed supply machine, 17 soil supply machine, 18 water supply machine, 19 position sensor, 20 seed, 21 seed taking-out mechanism, 22 seed distribution mechanism, 23 seed movement passages, 24 shaft, 25 rotary member, 26 holding member, 27 holding member advancing/retreating cam, 28 seed holder, 29 seed-holder opening/closing cam, 30 cam contact part, 33 carriage body part, 34 carriage caster, 35 tray retaining member, 36 tray, 37 irrigating member, 38 draining member, 39 housing, 40 supporting member, 41 light-emitting diode, 42 cooling pipes, 45 index table, 46 rotary table, 47 chuck opening/closing cam, 47a large-diameter cam surface, 47b small-diameter cam surface, 47c transient cam surface, 48 chuck lifting cam, 49 chuck set, 50 stock, 51 stock chuck, 52 scion, 53 scion chuck, 54 workpiece setting station, 55 first workpiece cutting station, 56 second workpiece cutting station, 57 tube attaching station, 58 workpiece taking-out station, 61 saucer, 64 stock set part, 65 scion set part, 66 cutting blade, 67 stock input chuck, 68 stock supply conveyer, 69 scion input chuck, 70 scion supply conveyer, 79 workpiece taking-out apparatus, 80 taking-out chuck, 81 taking-out conveyer.

## Claims

1. A seedling growing apparatus growing a seedling or a grafted seedling of a cultivated plant comprising: a carriage; and a carriage housing chamber housing the carriage, wherein
the carriage has a plurality of retaining members arranged vertically away from each other and each retaining a pot or a tray containing a seedling or a seed of a cultivated plant or a grafted seedling of a cultivated plant along with a cultivation medium thereof, wherein
the carriage housing chamber has a plurality of supporting members arranged vertically away from each other and each disposed with a light-emitting diode, wherein
each of the retaining members is disposed at a position between the two adjacent supporting members in a vertical direction, and wherein
the retaining members and the supporting members are configured such that when the carriage is housed in the carriage housing chamber, the retaining members and the supporting members are alternately positioned one by one in a vertical direction.

2. The seedling growing apparatus according to claim 1, wherein the carriage housing chamber is provided with a controller periodically alternately switching lighting and extinction of the light-emitting diode and controlling a switching period of lighting and extinction of the light-emitting diode, a light emission intensity during lighting of the light-emitting diode, and a percentage of a lighting time of the light-emitting diode in each switching period.

3. The seedling growing apparatus according to claim 2, wherein the carriage housing chamber is provided with a light-emitting diode moving mechanism changing a light radiation direction or a position of the light-emitting diode.

4. The seedling raising apparatus according to claim 3, wherein
each of the retaining members is provided with an irrigating member irrigating a seedling or a seed of a cultivated plant or a grafted seedling of a cultivated plant contained in the pot or tray retained on the retaining member as well as a draining member draining surplus water from the pot or tray, and wherein
the carriage housing chamber is provided with a water supply mechanism supplying water to the irrigating member.

5. A grafted seedling producing apparatus comprising:
a plurality of seedling raising apparatuses made up of seedling growing apparatuses according to any one of claims 1 to 4 and growing a seedling of a first cultivated plant to be used as a scion or a seedling of a second cultivated plant to be used as a stock;
a grafting apparatus creating a scion by cutting off a lower part of the seedling of the first cultivated plant grown by a first seedling raising apparatus of the plurality of seedling raising apparatuses while creating a stock by cutting off an upper part of the second cultivated plant grown by a second seedling raising apparatus of the plurality of seedling raising apparatuses, the grafting apparatus grafting the scion and the stock to create a grafted seedling; and
a nursery apparatus made up of the seedling growing apparatus according to any one of claims 1 to 4 and nursing the grafted seedling created by the grafting apparatus.

6. The grafted seedling producing apparatus according to claim 5, comprising a seeding apparatus creating a seed-containing cultivation medium made up of a seed of the first or second cultivated plant and a cultivation medium of the seed contained in a pot or a tray, the seeding apparatus placing the seed-containing cultivation medium on the carriage of the seedling raising apparatus.
